# EUROPEAN PATENT APPLICATION

(11) **EP 2 592 384 A1**
(43) Date of publication of application: **15.05.2013**
(21) Application number: 11189001.8
(22) Date of filing: 14.11.2011
(51) Int. Cl.: G01C 21/32, G06F 17/30

(54) **Navigation System with preparsed and unparsed Navigation Data**

(71) Applicant: Harman Becker Automotive Systems GmbH, 76307 Karlsbad (DE)
(72) Inventor: Spindler, CC., 76135 Karlsruhe (DE); Heitmann, Marcus, 85386 Eching (DE); Baptist, Stefan, 80992 München (DE); Kunath, Peter, 80999 München (DE)
(74) Representative: Bertsch, Florian Oliver

(57) **Abstract**

The invention relates to a navigation system providing navigation information for a user; a database storing navigation data used for providing the navigation information to the user, the navigation data being stored in data sets; an application configured to process the navigation data in order to generate the navigation information; and a parsing unit configured to parse the data sets in such a way that a data structure of the data sets is identified and that the data sets can be executed by the application, wherein the navigation data contain first data sets which have been parsed by the parsing unit and which are stored in the database as preparsed data sets, each of the first data sets containing an indication that the data set is a preparsed data set, the navigation data further containing second data sets which have not been parsed yet and which are stored in the database as unparsed data sets, each of the second data sets containing an indication that the data set is an unparsed data set, a control unit configured to select a data set needed to generate the navigation information and configured to detect the indication of the data set, wherein the control unit, based on the indication of the data set, is configured to direct the selected data set to the parsing unit when identifying the selected data set as a second data set, or to a working memory of the navigation system from where the application accesses the selected data set, when identifying the selected data set as a second data set.

## Description

### Field of the Invention

The present invention relates to a navigation system providing navigation information to a user and to a method therefor.

### Background

In the art navigation systems are known which provide navigation information to the user. The provided navigation information can contain information about a route calculated to a predefined destination. Furthermore, the navigation information can comprise information about points of interest, POI, such as sightseeing places, hospitals, restaurants, etc. The navigation information is based on navigation data stored in a database of the navigation system. Furthermore, the navigation system comprises different applications that, when executed, provide the navigation information. By way of example, one application may be a route-finding application configured to determine the fastest or shortest or any other route from a first location to a second location, another application being an application allowing a destination location to be identified. A further application may be an application allowing a geographical two-dimensional or three-dimensional map to be displayed to the user. The different applications need the navigation data to generate the corresponding navigation information. Before the navigation information can be used by the application, the navigation data have to pass a parsing unit where the data structure of the navigation data is identified and where the navigation data are processed in such a way that they can later on be executed by the application. One important aspect for the use of navigation systems is the aspect of how fast the required navigation information can be provided to the user. The navigation data are stored in the database as unparsed data sets and when an application needs access to a data set, the data set is fed to a parsing unit where the parsing of the data set is carried out. The parsed data set, after having passed the parsing unit, is fed to a working memory of the navigation system from where a data set can be accessed by the application needing the data set. The parsing step takes a certain amount of time.

In this context a need exists to provide the navigation information to the user as fast as possible.

### Summary

This need is met by the features of the independent claims. The dependent claims describe further aspects of the invention.

According to a first aspect of the invention, a navigation system is provided providing navigation information for a user. The navigation system comprises a database storing navigation data used for providing the navigation information to the user, the navigation data being stored in data sets. Furthermore, an application configured to process the navigation data in order to generate the navigation information is provided. The navigation system furthermore comprises a parsing unit configured to parse the data sets in such a way that a data structure of the data sets is identified and that the data sets can be executed by the application. The database and the navigation data therein contain first data sets which have been parsed by the parsing unit and which are stored in the database as preparsed data sets, and each of the first data sets contains an indication that the data set is a preparsed data set. The navigation data further contains second data sets which have not been parsed yet and which are stored in the database as unparsed data sets. Each of the second data sets contains an indication that the data set is an unparsed data set. Furthermore, a control unit is provided configured to select a data set needed to generate the navigation information and configured to detect the indication of the data set. The control unit is configured, based on the indication of the data set, to direct the selected data set to the parsing unit when identifying this selected data set as a second data set. Furthermore, the control unit directs the selected data to a working memory of the navigation system from where the application can access the selected data set, when it identifies the selected data set as a first data set.

By providing unparsed and preparsed data sets the operation of the navigation system can be further accelerated. For applications where the parsing time plays an important role and/or predominantly influences the provision of the navigation information to the user, the parsing time can be avoided for real-time application, as the data sets can be stored as preparsed data sets. For some of the data sets, by way of example a data set used to generate a road map to be displayed to the user, the parsing time can be avoided and the functioning of the navigation system can be accelerated by using preparsed data sets for data sets which allow the display of map data.

For other data sets, e.g. when a data set is used for identifying a destination location, the parsing time may not be the crucial factor so that this data set may be stored as a second, unparsed data set.

The information whether a data set is stored in the database is an unparsed or preparsed data set may be contained in the descriptive metadata of a data set.

The invention furthermore relates to a method for providing navigation information to a user of the navigation system, the navigation system comprising a database, an application, and a parsing unit, as described above. The method comprises the step of selecting a data set that is retrieved from the database to generate the navigation information for the user. In an additional step it is then determined whether the selected data set is a first data set or a second data set. When the selected data set is a first data set, the selected data set is fed directly to a working memory of the navigation system from where the application can access the selected data set. When it is determined that the selected data set is a second data set, the selected data set is fed to the parsing unit where it is parsed before it is transmitted to the working memory.

### Brief Description of the Drawings

The invention will be described in further detail with reference to the accompanying drawings, in which
Fig. 1 is a schematic view of a navigation system containing unparsed and preparsed data sets,
Fig. 2 shows the flow of the data sets in the system of Fig. 1 before they are used by an application generating the navigation information,
Fig. 3 further shows the processing steps of the data sets used in the system of Fig.1, and
Fig. 4 shows a flowchart containing the steps for selecting a data set before it is used by the application.

### Detailed Description

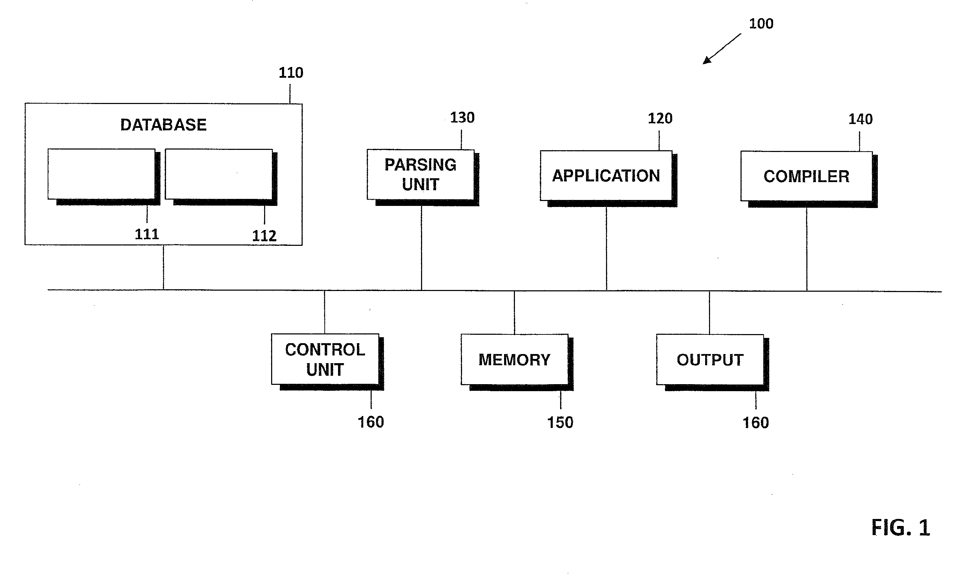

Fig. 1 schematically illustrates a navigation system which could be a handheld navigation system or a navigation system incorporated into a vehicle. The navigation system 100 comprises a database 110 in which the navigation data is stored that is used by an application 120 to generate navigation information. The navigation information can be any kind of information useful for a user of a navigation system, be it a driving recommendation, be it a displayed geographical map, be it information about a restaurant, a petrol station, a sightseeing spot etc. In the database the navigation data are stored in first data sets 111 and second data sets 112. The first data sets are data sets which have already been parsed by a parsing unit such as parsing unit 130 or by any other parsing unit before they are stored in the database 110. The first data sets are preparsed data sets. A parsing unit is a unit that checks the syntax of the information contained in the data sets and builds a data structure in such a way that an application such as application 120 can execute the information contained in the data set when they have been processed by the parser. The parsing unit 130 can be part of a compiler 140 where the raw data are compiled before they are stored in the database. The compiler 140 may be provided in the navigation system, however, it is also possible that the compiler is not contained in the navigation system but was only used when generating the navigation data to be stored in the database 110. Before the data sets of the database 110 can be used by an application 120, the data sets, after having passed the parsing unit, are fed to a working memory 150. The working memory is accessed by the application 120 to access the data sets. A control unit 160 is provided which controls the operation of the navigation system. The control unit may comprise a central processing unit, for example in the form of one or more microprocessors, digitals signal processors or application-specific integrated circuits. The navigation information generated by the application 120 can be output using output 160. The output can be a visual output on a display or can be a speech output, e.g. for providing a driving recommendation.

It should be understood that the navigation system may include additional components not shown in Fig. 1 such as a position sensor and/or a wireless receiver and/or a vehicle interface. The position sensor may be adapted to determine the current position of the navigation system. Furthermore, it should be understood that only the components needed for the understanding of the invention are shown. Additionally, the components shown may be incorporated as shown in Fig. 1, however, it is also possible that the different functions carried out by the components shown are incorporated into more or less physical entities than shown in Fig. 1. Furthermore, the entities shown in Fig. 1 may be incorporated by hardware or software or by a combination of hardware and software.

By way of example, the database may be an SQL-database, and the database may be provided on a fixedly installed storage unit or a removable storage unit.

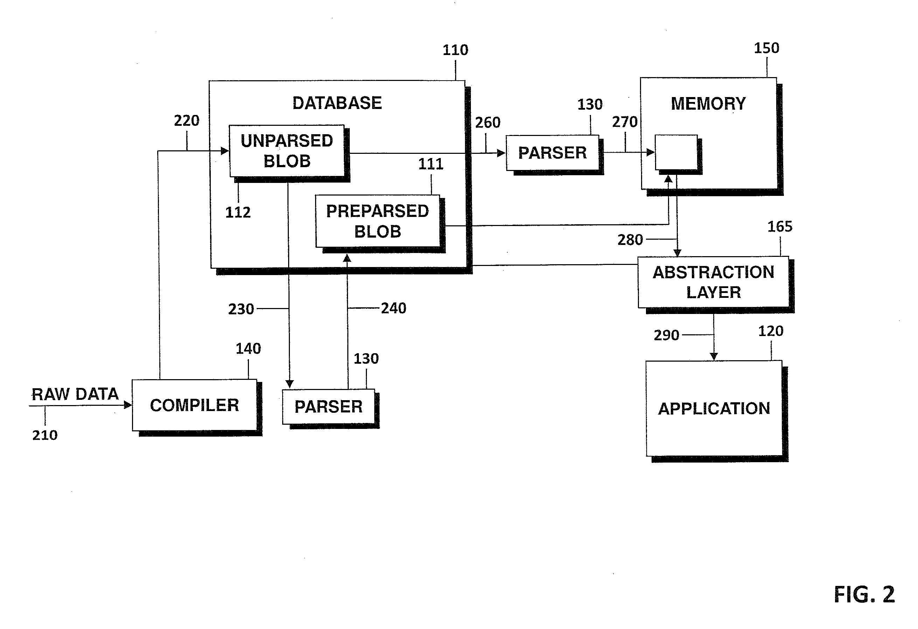

In Fig. 2 the processing of the data sets before they are used by application 120 is shown in more detail. For generating a database such as database 110 raw data of the navigation data are input into compiler 140 as shown by arrow 210. The compiler carries out a first compilation step. The compiler generates, from the raw data, the navigation data in a first preparation step. By way of example, the division of the geographical data into different geographical regions or the calculation of elevation data is carried out by the compiler. The compiler transmits the data sets, which are binary large objects (BLOB) in the embodiment shown in Fig. 2 to database 110. These data sets have not been parsed yet so that the data sets transmitted by arrow 220 are unparsed second data sets 112. For some of the data sets, it may be decided that it is useful to already store them as preparsed data sets. These data sets are fed to parsing unit 130 in step 230. After the data sets have been parsed they are transmitted back in step 240 to the database 110 where they are stored as preparsed data sets or first data sets 111. The steps 220 to 240 can be carried out before the navigation system and the database are actually used by a user and may be carried out during the design of the navigation system. In summary, the database now contains first data sets 111 which are the preparsed data sets and second data sets 112 which are not yet parsed. When the application 120 shown in Fig. 2 needs a data set, this need is identified by an abstraction layer 165 which plays the role of the control unit shown in Fig. 1. The abstraction layer is a module allowing the application 120 to be made independent from the data provided in memory 150. The abstraction layer or access layer in the present example determines a need for a data set by application 120 and accesses database 110 in order to select the needed data set.

The information whether a data set is an unparsed or preparsed data set may be contained in the metadata as an indication whether the data set is an unparsed or preparsed data set. By way of example, a toggle bit or flag may be provided, wherein if the flag is set or if one value of the bit is selected, the control unit shows that it is a first data set. If the flag is not set or if the other value of the bit is set, an indication is provided that the data set is a second data set. The abstraction layer 165 uses this indication indicating whether the data set is a first or second data set and, depending on the indication, the selected data set is either transmitted to parsing unit 130 when it is an unparsed data set or directly fed to the working memory 150 when it is a preparsed data set. The transmission path of the preparsed data set is indicated by arrow 250, whereas the transmission path of the unparsed data set is indicated by arrow 260 indicating the path from database to parsing unit 130, and arrow 270 indicating the path from the parsing unit to the memory 150. When the data sets are received by the memory the structure of the data set is the same independent of the fact whether it has chosen the path 230, 240 and 250 or the path 260, 270. The parsed data sets are then fed to the abstraction layer in path 280 from where they are further transmitted to the application in step 290.

It can be deduced from Fig. 2 that the compiler generates unparsed BLOBs or data sets and that for the preparsed data sets the time needed for parsing the data sets is shifted to a time where the database is generated.

Thus, when the application uses an already parsed data set, the data set does not need to be transmitted to the parsing unit 130, but can be directly transferred to the memory 150. This accelerates the functioning of the navigation system.

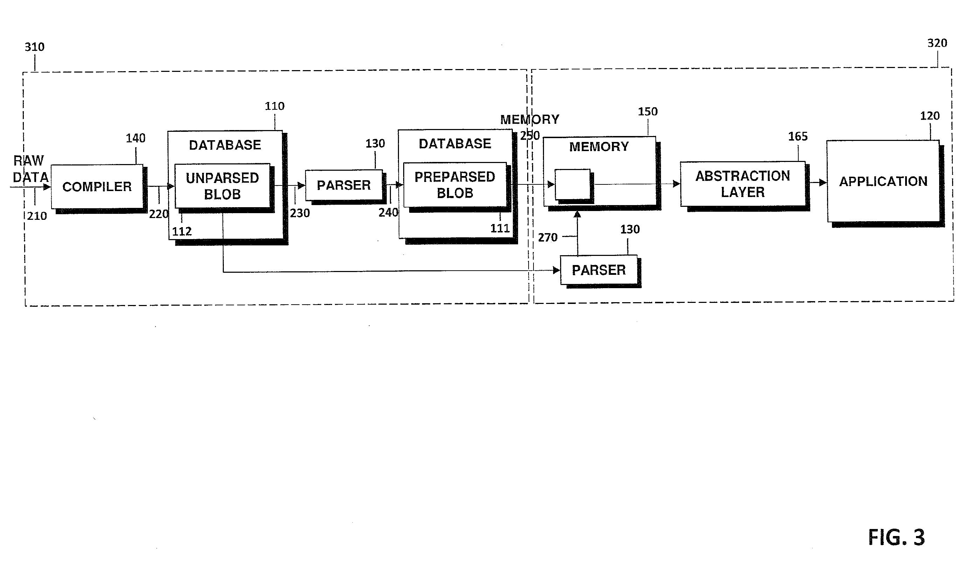

This is further illustrated by Fig. 3, where the processing times by the compiler and by the navigation system are shown. The dashed line 310 indicates steps carried out at the compilation of the navigation database before it is used by the user, whereas the dashed line 320 shows the steps carried out by the navigation system during use. As already discussed in connection with Fig. 2, the raw data are passed to the compiler from where they are transmitted to the database 110. Some of the data sets are transmitted to parsing unit 130 and are then stored in the database as preparsed data sets 111 from where they are fed to the working memory 150. The other, unparsed data sets 112 stay in the database as non-parsed data sets. When the application needs an unparsed data set it is fed to parsing unit 130 during runtime on the navigation system where the data set is parsed and then fed to memory 150. As steps 230, 240 are not carried out on a navigation system when the navigation system is used, the overall processing time needed to generate navigation information can be reduced. The arrows indicated in Fig. 3 correspond to the arrows of Fig. 2.

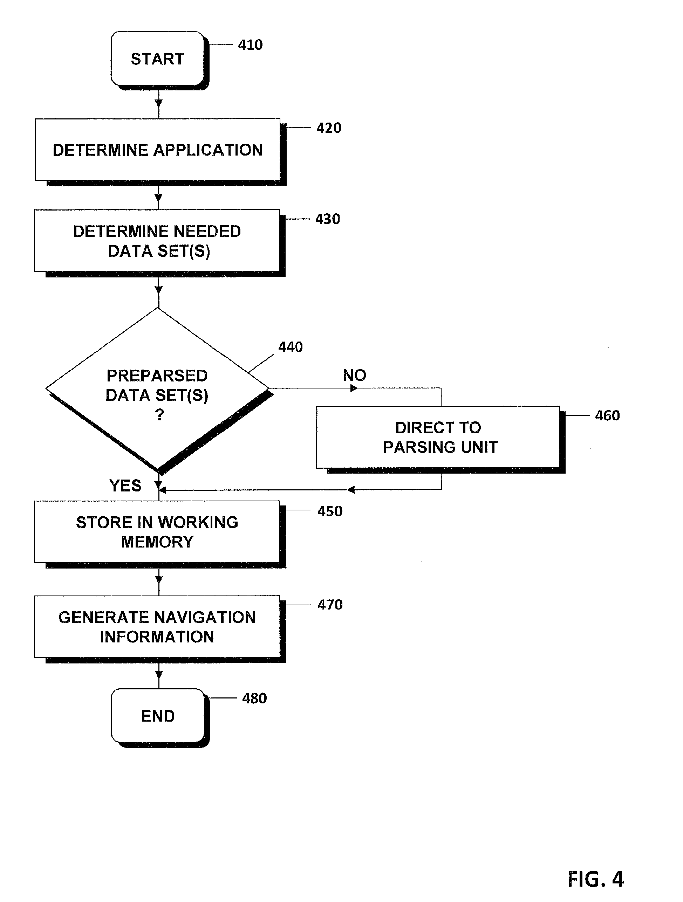

In Fig. 4 the different steps for generating a navigation information are summarized. The method starts in step 410 and in step 420 it is determined which application is used. By way of example, the user may wish to display a certain area of a geographical map on a display. In step 430 it is determined which data sets from the database have to be selected to generate the required navigation information. In step 440 it is then checked whether the selected data set is a preparsed data set or an unparsed data set. As discussed above, this can be determined by retrieving information from the data set whether the data set is a preparsed data set or an unparsed data set. This indication may be stored in the metadata of the data set or somewhere else. For the complete navigation database metadata may exist, where inter alia the information is stored in an encrypted way or not. A similar solution is possible for storing the indication about the preparsed or unparsed data set. A table for the complete database may be provided in which the information is stored which of the data sets are first data sets and which of the data sets are second data sets. If it is determined in step 440 that the required and selected data set is a preparsed data set, the data set can be directly fed to the working memory in step 450. If it is, however, determined that the data set is not a preparsed data set but an unparsed data set, the data set is first transmitted to the parsing unit in step 460 where the data set is parsed. The parsed data set, after step 460, is then also stored in the working memory. In step 470 the application then generates the navigation information using the parsed information provided in the working memory. The method ends in step 480.

The invention described above may be implemented in different ways. In general terms, the database may be an SQL-database, however any other kind of database may be used. Furthermore, the data set may be a large binary object, however the data set may have any other form. Furthermore, the different embodiments described above can be combined in any way.

## Claims

1. A navigation system (100) providing navigation information for a user
- a database (110) storing navigation data used for providing the navigation information to the user, the navigation data being stored in data sets,
- an application (120) configured to process the navigation data in order to generate the navigation information
- a parsing unit (130) configured to parse the data sets in such a way that a data structure of the data sets is identified and that the data sets can be executed by the application (120),
wherein the navigation data contain first data sets (111) which have been parsed by the parsing unit (130) and which are stored in the database (110) as preparsed data sets, each of the first data sets (111) containing an indication that the data set is a preparsed data set,
the navigation data further containing second data sets (112) which have not been parsed yet and which are stored in the database (110) as unparsed data sets, each of the second data sets (112) containing an indication that the data set is an unparsed data set,
a control unit (160) configured to select a data set needed to generate the navigation information and configured to detect the indication of the data set, wherein the control unit, based on the indication of the data set, is configured to direct the selected data set to the parsing unit (130) when identifying the selected data set as a second data set, or to a working memory (150) of the navigation system from where the application accesses the selected data set, when identifying the selected data set as a first data set.

2. The navigation system according to claim 1, wherein the database (110) is an SQL database.

3. The navigation system according to claim 1 or 2, wherein each data set contains descriptive metadata, wherein the indication whether the data set is an first or second data set is stored in the descriptive metadata.

4. The navigation data system according to any one of the preceding claims, wherein the data set (111, 112) is a large binary object.

5. The navigation data system according to any one of the preceding claims, wherein, when the selected data set allows, when processed by the application, a generation of a road map displayed to the user containing the navigation information, the selected data set is a first data set.

6. The navigation data system according to any one of the preceding claims, wherein, when the selected data set allows, when processed by the application, an identification of a destination location for the navigation system, the selected data set is a second data set.

7. A method for providing navigation information to a user of a navigation system (100), the navigation system comprising a database (110) storing navigation data used for providing the navigation information to the user, the navigation data being stored in data sets, an application (120) configured to process the navigation data in order to generate the navigation information, and a parsing unit (130) configured to parse the data sets in such a way that a data structure of the data sets is identified and that the data set can be executed by the application, the method comprising the steps of:
- selecting a data set that has to be retrieved from the database (110) to generate the navigation information for the user,
- determining, whether the selected data set is a first data set (111) which has been parsed by the parsing unit (130) and which is stored in the database as a preparsed data set, each of the first data sets (111) containing an indication that the data set is a preparsed data set, wherein if it is determined that the selected data set is a first data set, the selected data set is fed to a working memory (150) of the navigation system from where the application (120) accesses the selected data set, wherein if it is determined, that the selected data set is a second data set (112) which has not been parsed yet and which is stored in the database as an unparsed data set, the selected data set is fed to the parsing unit (120), wherein the second data set (112) is parsed before it is transmitted to the working memory (150).

8. The method according to claim 7, wherein the first data (111) sets and the second data sets (112) each contain an indication indicating whether the data set is a preparsed data set or an unparsed data set, wherein it is determined whether the selected data set is fed to the parsing unit (130) or to the working memory (150) based on the indication.

9. The method according to claim 8, wherein the indication is stored in descriptive metadata of the data set, wherein it is determined whether the selected data set is an unparsed or preparsed data set by identifying the indication in the descriptive metadata.
